# EUROPÄISCHE PATENTSCHRIFT

(11) **EP 2 907 832 B1**
(45) Veröffentlichungstag und Bekanntmachung des Hinweises auf die Patenterteilung: **19.10.2016**
(21) Anmeldenummer: 15155355.9
(22) Anmeldetag: 17.02.2015
(51) Int. Cl.: C08G 18/71, C08G 18/10, C08G 18/28, C08G 18/48, C09J 175/08, E04C 5/00

(54) **VERFAHREN ZUR DRUCKWASSERFESTEN ABDICHTUNG VON BAUWERKEN**
METHOD FOR SEALING BUILDING STRUCTURES AGAINST PRESSURISED WATER
PROCÉDÉ D'ÉTANCHÉITÉ RÉSISTANT À L'EAU SOUS PRESSION POUR CONSTRUCTIONS

(30) Priorität: 17.02.2014 DE 102014101949
(43) Veröffentlichungstag der Anmeldung: 19.08.2015
(73) Patentinhaber: FRANKEN-Systems GmbH, 97318 Kitzingen (DE)
(72) Erfinder: Luckert, Sven, 97320 Sulzfeld (DE); Schmalstieg, Lutz, 51065 Köln (DE); Napravnik, Georg, 73037 Göppingen Holzheim (DE)
(74) Vertreter: Petri, Lars

(56) Entgegenhaltungen:
- EP-A1- 1 544 254

## Beschreibung

Verfahren zur druckwasserfesten Abdichtung Verbindungen, Durchdringungen und/oder Anschlüssen von polymeren Frischbetonverbundfolien durch Applikation einer Flüssigabdichtung auf Basis von Alkoxysilan-funktionellen Polyether-Polymeren.

Die Abdichtung von Bauwerken ist von zentraler Bedeutung für die Dauerhaftigkeit von Gebäuden. Die ordnungsgemäße Ausführung der Abdichtung wird durch die DIN 18195 normativ geregelt, wobei im Teil 6 und 7 der DIN 18195 speziell die Abdichtung von Bauwerken gegen von außen oder von innen drückendes Wasser geregelt wird. Eine besondere Bedeutung besitzen in diesem Zusammenhang polymere oder bituminöse Abdichtungsbahnen, die zwecks dauerhafter Abdichtung vollflächig mit dem Untergrund verklebt werden.

Speziell bei der Abdichtung von Betonbauwerken haben sich in jüngerer Zeit sog. Frischbetonverbundfolien bewährt, die den großen Vorteil besitzen, dass diese Abdichtungsfolien nicht erst nach Abbinden des Betons -was üblicherweise erst nach 28 Tagen der Fall ist- aufgebracht werden, sondern vor dem Betonieren, wobei diese Folien dann im Verlauf der Aushärtung des Betons eine innige Verbindung mit dem Beton eingehen. Hierbei haben sich Folien bewährt, die auf der dem Beton zugewandten Seite eine Klebeschicht aufweisen, wie dies beispielhaft in der DE 19611297 beschrieben ist oder aber Folien, die auf der dem Beton zugewandten Seite eine Vlieskaschierung tragen, so wie dies beispielhaft in der DE 10342678 beschrieben wird oder auch in der DE 102006033803.

Die Einführung der Frischbetonverbundfolien hat zu einer deutlichen Verkürzung der Bauzeit beigetragen, weswegen solche Folien heutzutage in großem Umfang bei der Bauwerksabdichtung insbesondere bei der Abdichtung gegen drückendes Wasser unterhalb der Erdsohle eingesetzt werden. Diese Folien werden entweder auf Basis von Bitumen hergestellt oder auf Basis von synthetischen Polymeren. Die DIN 18195 regelt hierbei klar, dass neben Bahnen auf Bitumenbasis Polymerbahnen auf Basis von Polyisobutylen PIB, Polyvinylchlorid PVC, Ethylen-Vinylacetat-Terpolymer EVA, Ethylen-Propylen-Dien-Terpolymer EPDM und solche auf Basis flexibilisierter Polyolefine FPO bei der Bauwerksabdichtung eingesetzt werden können.

Frischbetonverbundfolien werden als Rollenware angeboten und müssen zwangsläufig an den Stoß- und Nahtstellen und auch im Bereich von Abschlüssen, Anschlüssen und Durchdringungen sicher abgedichtet werden. Im Falle der Polymerverbundfolien erfolgt dies typischerweise durch Verkleben mit Klebebändern oder Schmelzklebern, durch Verschweißen oder durch Abdichtung mit Flüssigkunststoffen.

Besonders problematisch ist insbesondere die Abdichtung von Abschlüssen, Anschlüssen und Durchdringungen, welche erst nach dem Betonieren druckwasserfest abgedichtet werden müssen, d.h. Abdichtungsstellen die auf der dem Beton abgewandten Seite der Verbundfolie liegen. Hier gibt es einen erheblichen Verbesserungsbedarf. Die langjährige Erfahrung hat gezeigt, dass insbesondere bei hohen Wasserdrucken eine Abdichtung mit Klebebändern oder Flüssigkunststoffen des Standes der Technik allein keinen ausreichenden Schutz gegen drückendes Wasser bietet, weswegen in der Regel mit einer Kombination aus Klebebändern und Flüssigkunststoffen gearbeitet werden muss. Dies ist unter mehreren Gesichtspunkten nachteilig: Die Abdichtung mit Klebebändern und Flüssigkunststoffen des Standes der Technik kann erst nach vollständiger Aushärtung des Betons erfolgen, d.h. nach einer Dauer von mindestens 28 Tagen, erfolgen. Daraus resultieren dann oftmals Haftungsprobleme, die durch Feuchtigkeit, Alterung und/oder Verschmutzung der polymeren Frischbetonverbundfolien verursacht werden.

Flüssigkunststoffe auf Basis silylierter Polymere sind seit vielen Jahren bekannt und gehören in der Bauwerksabdichtung mittlerweile zum etablierten Stand der Technik. Ein Übersichtsartikel zur Thematik findet sich in "Adhesives Age" 4/1995, Seite 30 ff. (Autoren: Ta-Min Feng, B. A. Waldmann). Entsprechende Produkte, insbesondere silylierte Polyurethane werden beispielhaft beschrieben in den Patentanmeldungen EP 819749, DE 1745526, US 3627722, EP 531972, EP 596360, WO 2004022625, WO 2005108515, WO 2007048538.

Die amerikanische Anmeldung US 6679018 beschreibt darüber hinaus die Verklebung von vlieskaschierten Dachfolien mit Hilfe silylierter Polymere, wobei sich aber in dieser Anmeldung keinerlei Hinweise darauf finden, dass derartige Verbindungen mit Dachfolien besonders beständig gegen drückendes Wasser sind. Vielmehr legt diese Anmeldung nahe, dass die silylierten Polymere lediglich zur Verklebung der Dachfolien geeignet sind und selbst keine dichtende Funktion ausüben.

Die europäische Patentanmeldung EP 1544254 beschreibt beispielhaft die Verwendung bituminöser Abdichtungsmaterialien mit silylierten Polymeren bei Dachmaterialien sowie bei Unterböden von Automobilen. Gemäß Beispiel 2 wird eine einkomponentige, feuchtigkeitsaushärtende Zusammensetzung auf Basis von silylterminierten Polyethern zur Verklebung von Dachbahnen eingesetzt.

Schließlich beschreibt die amerikanische Anmeldung US 2007/0088137 A1 die Verklebung von Dachabdichtungsbahnen aus Gummi, insbesondere EPDM-Abdichtungsbahnen mit Hilfe von Klebstoffkompositionen auf Basis von silylierten Polymeren und Phenolharzen. Auch dieser Anmeldung können keinerlei Hinweise auf Beständigkeiten gegenüber drückendem Wasser zu entnehmen, zumal gemäß der Lehre dieser Patentanmeldung die gute Haftung zu EPDM erst durch den Zusatz von Phenolharzen erzielt wird.

Aufgabe der vorliegenden Erfindung war daher die Bereitstellung eines verbesserten Verfahrens zur druckwasserfesten Abdichtung von polymeren Frischbetonverbundfolien im Bereich von Verbindungen, Durchdringungen und/oder Anschlüssen mit Hilfe von Flüssigkunststoffen als Abdichtungsmassen. Diese Aufgabe konnte mit Hilfe des nachstehend näher beschriebenen Verfahrens gelöst werden.

Gegenstand der vorliegenden Erfindung ist ein verbessertes Verfahren zur druckwasserfesten Abdichtung von polymeren Frischbetonverbundfolien im Bereich von Verbindungen, Durchdringungen und/oder Anschlüssen durch Applikation einer Flüssigabdichtungsmasse auf Basis von Alkoxysilanfunktionellen Polyether-Polymeren gemäß Anspruch 1.

Die Erfindung beruht auf der überraschenden Beobachtung, dass Flüssigkunststoffe auf Basis bestimmter nachstehend näher charakterisierter Alkoxysilan-funktioneller Polyether-Polymere im Zuge ihrer Aushärtung eine besonders druckwasser-resistente Verbindung mit den, vorzugsweise DINgerechten, polymeren Frischbetonverbundfolien des Standes der Technik, insbesondere mit Frischbetonverbundfolien auf Polyolefinbasis eingehen können, und damit eine besonders druckwasserresistente Abdichtung ergeben. Diese Tatsache erscheint insbesondere vor dem Hintergrund der hohen Wasserdampfdurchlässigkeit solcher Flüssigkunststoffe, insbesondere im ausgehärteten Zustand, als ausgesprochen überraschend.

Ferner betrifft die Erfindung eine Bauwerksabdichtung, welche nach dem erfindungsgemäßen Verfahren hergestellt ist. Des Weiteren betrifft die Erfindung einen Bauwerksabschnitt mit einer erfindungsgemäß hergestellten Abdichtung, wobei bauwerksinnenseitig zu der Frischbetonverbundfolie, mit der Frischbetonverbundfolie flächig und unmittelbar verbunden, eine Betonschicht angeordnet ist.

Die im erfindungsgemäßen Verfahren einzusetzenden Flüssigabdichtungsmassen auf Basis silylierten Polyether-Polymere enthalten in der Regel keinerlei Phenolharze.

Im erfindungsgemäßen Verfahren einsetzbare Flüssigabdichtungsmassen auf Basis silylierte Polyether-Polymere können nach an sich bekannten Verfahren hergestellt werden.

Im Rahmen der Erfindung bezieht sich der Begriff der "Flüssigabdichtung" stets auf die Flüssigabdichtungsmasse, sofern sich sonst im Einzelnen nichts anderes ausgeführt ist.

Der Begriff "Frischbeton" im Rahmen der Erfindung ist insbesondere zu verstehen gemäß dem Zement-Merkblatt Betontechnik B4, Ausgabe 3.2013, "Frischbeton: Eigenschaften und Prüfungen", herausgegeben vom Verein Deutscher Zementwerke e.V., Düsseldorf (http://www.beton.org/fileadmin/betonorg/media/Dokumente/PDF/Service/Zementmerkbl%C3%A4tter/B4.pd f). Solange also der fertiggemischte Beton verarbeitet und verdichtet werden kann, wird er als Frischbeton bezeichnet. Er muss insbesondere so zusammengesetzt sein, dass er mit den in Aussicht genommenen Verfahren für Fördern, Einbringen und Verdichten verarbeitbar und vollständig verdichtbar ist. Maßgebend ist hierbei, dass der erhärtete Beton die geforderten Festbetoneigenschaften aufweist. Insbesondere kann der Frischbeton, auch im Rahmen der Erfindung, die angegebenen Setzmaßklassen S1 - S5 nach DIN EN 12350-2 erfüllen. Der Frischbeton kann ferner, insbesondere auch in Kombination mit dem oben Gesagten, die Konsistenzklassen C0 - C3 bzw. F1 - F6 erfüllen.

Der Begriff "Frischbetonfolie" im Rahmen der Erfindung bezieht sich allgemein auf Folien bzw. Dichtungsbahnen, welche eine wasserdichte Folienlage vorzugsweise aus einem Kunststoffmaterial aufweisen und eine flächige, im speziellen vollflächige, Verbindung mit dem Frischbeton eingehen können. Hierzu kann eine Textillage wie Vlies oder eine Klebeschicht vorgesehen sein. Insbesondere sind hierbei Frischbetonverbundfolien mit umfasst. Diese weisen im Allgemeinen einen mehrlagigen Aufbau auf, umfassend eine wasserdichte Folienlage vorzugsweise aus einem Kunststoffmaterial, sowie eine Lage aus einem penetrationsfähigen Textilmaterial wie Vlies und gitterförmigen Hinterlaufschutz, so dass durch die Folie vorzugsweise eine Hinterläufigkeit der Flächenabdichtung verhindert wird. Gegebenenfalls kann an Stelle der Textillage auch eine andere Verbindungsschicht wir eine Klebemittellage vorgesehen sein. Die Verbindung von Folie und Frischbeton ist hierbei besonders bevorzugt dauerhaft, was insbesondere durch Erzeugung eines physikalischen Verbundes im Sinne einer Mikroverzahnung erziel werden kann. Beispielhaft sei auf das Produkthandbuch "FBV Frischbetonverbunddichtungsbahn" der Fa. Sika Deutschland GmbH, Ausgabe 2/2011, verwiesen, welches durch Inbezugnahme hiermit vollinhaltlich mit umfasst ist. Auf die nachfolgenden Ausführungen zu den besonderen Eigenschaften von Frischbetonverbundfolien, welche im erfindungsgemäßen Verfahren eingesetzt werden, sei explizit verweisen.

Die im erfindungsgemäßen Verfahren einsetzbare Flüssigabdichtungsmasse auf Basis silylierte Polyether-Polymere enthält die folgenden Komponente A als Bindemittelkomponente:
A) silylierte Polyurethane, die entweder hergestellt werden können (bzw. hergestellt werden) durch:
   (i) Umsetzung von Isocyanat-Prepolymeren auf Basis langkettiger Polyether mit Aminosilanen der allgemeinen chemischen Strukturformel 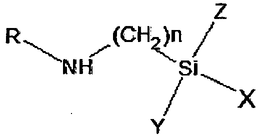 wobei R für einen organischen Rest mit 1 bis 12 Kohlenstoffatomen steht, n für eine ganze Zahl von 1 bis 4 steht und X, Y, Z gleiche oder verschiedene organische Reste darstellen, mit der Maßgabe, daß mindestens einer der Reste eine Alkoxygruppe mit 1 bis 4 Kohlenstoffatomen, vorzugsweise eine Methoxy- oder Ethoxygruppe steht
      oder
   (ii) durch Umsetzung langkettiger Polyetherpolyole, vorzugsweise Polyetherdiole mit Isocyanatosilanen der allgemeinen Strukturformel 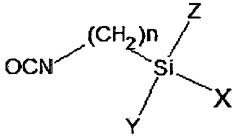 worin n, X,Y, und Z die obengenannte Bedeutung haben.

Im erfindungsgemäßen Verfahren einsetzbare Flüssigabdichtungen auf Basis silylierte Polyether-Polymere enthält bevorzugt allgemein im Rahmen der Erfindung ≥ 20 Gew.-% oder ≥ 30 Gew.-% die genannte Komponente A.

Die erfindungsgemäße Flüssigabdichtung wird erhalten durch Bereitstellung der Komponente A in Form silylierter Polyurethane durch Zugabe weiterer Komponenten (unabhängig von der Reihenfolge der Zugabe), insbesondere der folgenden Komponenten B bis D:
B) mindestens einen basischen Füllstoff (wie beispielsweise gefällte oder gemahlene Kreiden, Metalloxide, -sulfate, - silicate, -hydroxyde, -carbonate und -hydrogencarbonate; weitere Füllstoffe sind z. B. verstärkende und nichtverstärkende Füllstoffe, wie pyrogene oder gefällte Kieselsäuren, Ruß oder Quarzmehl. Sowohl die basischen Füllstoffe als auch die weiteren verstärkenden oder nichtverstärkenden Füllstoffe können gegebenenfalls oberflächenmodifiziert sein. Besonders bevorzugt sind als basische Füllstoffe B) gefällte oder gemahlene Kreiden, Oxide und/oder Hydroxide des Aluminiums sowie pyrogene Kieselsäuren. Bei Komponente B) handelt es sich bevorzugt um Gemische der genannten Füllstoffe. Derartige Füllstoffe sind an sich allgemein bekannt.).
C) mindestens ein Aminosilan der allgemeinen Formel 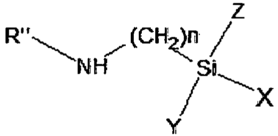 wobei R" für ein Wasserstoffatom, einen organischen Rest wie einen aliphatischen Kohlenwasserstoffrest mit bis zu 20 Kohlenstoffatomen, Trialkoxysilylpropylgruppe oder eine Aminoethylgruppe steht und n, bzw. X, Y, Z die obengenannte Bedeutung haben. Beispiele für einsetzbare Aminosilanverbindungen C) sind 3-Aminopropyltrimethoxysilan, 3-Aminopropyltriethoxysilan, N-Methyl-3-aminopropyltrimethoxysilan, N-Aminoethyl-3-aminopropyltrimethoxysilan, N-Aminoethyl-3-aminopropyltriethoxysilan, 3-Aminopropyl-methyldiethoxysilan, N,N-Bis-trimethoxysilyl-propylamin, N-Aminoethyl-3-aminopropylmethyldimethoxysilan. Selbstverständlich können auch Gemische und/oder Kondensationsprodukte von Aminosilanverbindungen als Komponente C) eingesetzt werden.
D) gegebenenfalls weitere Hilfsstoffe, wobei insbesondere Flammschutzmittel, wie beispielsweise Phosphorsäureester, Lackhilfsmittel wie Entschäumer, Entlüfter, Verlaufshilfsmittel, Thixotropiermittel oder Dispergierhilfsmittel, Haftvermittler wie insbesondere funktionelle Alkoxysilane, Katalysatoren zur Beschleunigung der Aushärtung mittels Silanpolykondensation, anorganische oder organische Pigmente, Tröcknungsmittel wie insbesondere reaktive Alkoxysilylverbindungen, Fungizide, Lösemittel und Weichmacher verwendet werden (bevorzugt beträgt der Anteil an Lösemitteln und Weichmachern weniger als 10 Gew% bez. auf das Gesamtgewicht der Flüssigabdichtung, besonders bevorzugt weniger als 5%). Derartige Hilfsstoffe sind an sich allgemein bekannt).

Durch Verwendung einer Flüssigabdichtungsmasse enthaltend die Komponenten A), B) und C), wird in besonderem Maße eine druckwasser-resistente Verbindung mit der polymeren Frischbetonverbundfolie, insbesondere mit Frischbetonverbundfolien auf Polyolefinbasis, eingegangen, und damit eine besonders druckwasserresistente Abdichtung erhalten, wobei die ausgehärtete Abdichtmasse eine hohe Wasserdampfdurchlässigkeit aufweist.

Die langkettigen Polyether der Komponente A sind solche der aus der Polyurethanchemie an sich bekannten Art wie sie beispielsweise durch Ethoxylierung und oder Propoxylierung geeigneter Startermoleküle hergestellt werden. Geeignete Startermoleküle sind insbesondere Triole und bevorzugt Diole, vorzugsweise mit 2 bis 10 oder insbesondere 2 bis 8 Kohlenstoffatomen, wie beispeilsweise Ethylenglykol, Propylenglykol, 1,3-Butandiol, 1,4 Butandiol, 1,6 Hexandiol, 2-Ethylhexandiol-1,3. Geeignete Startermoleküle sind beispielsweise auch primäre Monoamine, vorzugsweise solche mit 1 bis 8 oder mit 2 bis 6 Kohlenstoffatomen, wie beispielsweise Ethylamin oder Butylamin. Bevorzugt einsetzbare Polyoxyalkylendiole weisen ein mittleres Molekulargewicht von 3000 bis 20000, vorzugsweise 4000 bis 18000 auf, wobei das Molekulargewicht aus dem OH-Gehalt und der Funktionalität der Verbindung berechnet sein kann. Bevorzugt einsetzbare Polyoxyalkylendiole weisen unabhängig hiervon oder in Kombination hiermit einen Ethylenoxydgehalt von maximal 20 Gew%, bezogen auf Gesamtgewicht des Polyoxyalkylendiols auf.

Ganz besonders bevorzugt werden als Komponente ii) Polypropylenoxydpolyether mit einen Gesamt-Unsättigungsgrad von maximal 0,04 mÄq/g und einem mittleren (beispielsweise aus OH-Gehalt und Funktionalität berechneten) Molekulargewicht von 8000 bis 12000 eingesetzt.

Die erfindungsgemäß besonders bevorzugt einsetzbaren Polyetherpolyole mit niedrigem Unsättigungsgrad sind prinzipiell bekannt und werden beispielhaft beschrieben in EP 283148, US-P 3278457, US-P 3427256, US-P 3829505, US-P 4472560, US-P 3278458, US-P 3427334, US-P 3941849, US-P 4721818, US-P 3278459, US-P 3427335, US-P 4355188. Besonders bevorzugt erfolgt zur Herstellung derartiger Polyetherpolyole mit niedrigem Unsättigungsgrad durch Katalyse mit Metallcyaniden. Entsprechende Polyetherdiole sind beispielsweise unter dem Handelsnamen Acclaim-Polyol von der Fa. Bayer-Materialscience AG, Leverkusen erhältlich.

In Bezug auf die Herstellung der beiden Varianten (i) und (ii) der silylierten Polyurethane (Komponente A) sei ferner auf die Produktbeschreibung der Fa. Wacker Chemie AG "Silicones: ALPHA-SILANE TERMINATED POLYMERS AS NOVEL BINDERS FOR FAST CURING ELASTIC ADHESIVES", Ausgabe 6190e04.05, betreffend das Produkt Geniosil, verwiesen (http:// www.wacker.com/cms/media/publications/downloads/6190_EN.pdf), welche hiermit vollumfänglich mit umfasst sei.

Die im erfindungsgemäßen Verfahren einzusetzenden Flüssigabdichtungen auf Basis silylierter Polyether-Polymere können nach an sich bekannten Verfahren hergestellt werden, beispielsweise durch Dispergierung in einem Dissolver unter Feuchtigkeitsausschluss.

Die im erfindungsgemäßen Verfahren einzusetzenden Flüssigabdichtungen enthalten vorzugsweise 30 bis 80 Gew% an Komponente A), besonders bevorzugt 40 bis 60 Gew.-% derselben. Allgemein kann der Gehalt der Komponenten A an der Flüssigabdichtung ≥ 20 Gew.-% und/oder ≤ 85 Gew.-% betragen.

Die im erfindungsgemäßen Verfahren einzusetzenden Flüssigabdichtungen enthalten vorzugsweise 10 bis 60 Gew.-% an Komponente B), besonders bevorzugt 25 bis 50 Gew.-% derselben. Allgemein kann der Gehalt der Komponenten B an der Flüssigabdichtung ≥ 10 Gew.-% und/oder ≤ 70 Gew.-% betragen.

Die im erfindungsgemäßen Verfahren einzusetzenden Flüssigabdichtungen enthalten vorzugsweise 0,5 bis 5 Gew.-% an Komponente C), besonders bevorzugt 0,6 bis 3 Gew.-% derselben.

Die im erfindungsgemäßen Verfahren einzusetzenden Flüssigabdichtungen enthalten vorzugsweise 2 bis 15 Gew.-% an Komponente D), besonders bevorzugt 5 bis 12 Gew.-% derselben. Allgemein kann der Gehalt der Komponenten B an der Flüssigabdichtung ≥ 1 Gew.-% und/oder ≤ 20 Gew.-% betragen. Die obigen Angaben des Gehaltes der Flüssigkeitsabdichtung beziehen sich auf das Gesamtgewicht der Flüssigabdichtung (ohne etwaig ergänzende Versteifungslagen usw.).

Die im erfindungsgemäßen Verfahren einzusetzenden Flüssigabdichtungen auf Basis silylierter Polyurethane zeigen eine hohe Wasserdampfdurchlässigkeit entsprechend einer Wasserdampf- diffusionswiderstandszahl µ von weniger als 1500 bevorzugt weniger als 1000. Die Abdichtungen sind damit relativ diffusionsoffen und entsprechen in ihrem Wasserdampfdiffusionswiderstand dem Putz- und Mauermörtel. Vor diesem Hintergrund war es ausgesprochen überraschend, dass derartige Flüssigabdichtungen beständig gegen sehr hohe Wasserdrucke bis zu 2,5 bar sind.

Die Prüfung des Wasserdampfdiffusionsverhalten wurde allgemin im Rahmen der Erfindung gemäß DIN EN 1931:03-2001 "Abdichtungsbahnen - Bitumen-, Kunststoff und Elastomerbahnen für Dachabdichtungen - Bestimmung der Wasserdampfdurchlässigkeit" durchgeführt.

Die erfindungsgemäße Flüssigabdichtung weist somit in ausgehärtem Zustand (Aushärtung, bis die maximale Wasserdruckbeständigkeit erreicht ist) ein Beständigkeit gegen Wasserdrucke bis zu 1 bar, oder vorzugsweise bis zu 1,5 bar oder bis zu 1,75 bar, besonders bevorzugt bis zu 2 bar oder bis zu 2,5 bar auf. Die Wasserdruckbeständigkeit bezieht sich im Rahmen der Erfindung insbesondere auf eine positive Druckbelastung.

Die Wasserdruckbeständigkeit im Rahmen der Erfindung bezieht sich jeweils insbesondere auf eine Dichtigkeit gegen drückendes Wasser gemäß der DIN 18195, insbesondere gemäß 18195-3, 18195-8, 18195-9, 18195-10 bzw. den Teilen 6 und 7 betreffend die Abdichtung von Bauwerken gegen von außen oder von innen drückendes Wasser geregelt wird. Im speziellen gilt dies jeweils in Bezug auf von außen drückendes Wasser. Auf diese Norm, und in Bezug auf alle sonstigen Normen im Rahmen der Erfindung, sei auf die jeweils aktuellste gültige Fassung vor dem Prioritätstag dieser Anmeldung, dem 17. Februar 2014, Bezug genommen.

Im erfindungsgemäßen Verfahren einsetzbar sind praktisch alle marktgängigen polymere Frischbetonverbundfolien, beispielsweise auf Basis von Polyisobutylen PIB, Polyvinylchlorid PVC, Ethylen-Vinylacetat-Terpolymer EVA, Ethylen-Propylen-Dien-Terpolymer EPDM und bevorzugt solche auf Basis flexibilisierter Polyolefine FPO.

Die Flexibilisierung der FPO-Folien bzw. Bahnen kann insbesondere durch Verwendung geeigneter Copolymerisate erfolgen, diese sind weniger steif als z.B. Polyethylen (Quelle: http://www.baunetzwissen.de/standardartikel/Flachdach TPO FP O 156095.html, welche hiermit vollumfänglich mit umfasst ist). Derartige FPO-Folien weisen zumeist durchgehende Lagen aus thermoplastischem Polyolefin (TPO) auf und bestehen zumeist aus Legierungen verschiedener Einzelkunststoffe wie Polyethylen, Polypropylen und Polybutylen sowie vorzugsweise einer integrierten Armierung. Sie gehören zur Gruppe der Kunststoff-Abdichtungssysteme.

Im Rahmen der vorliegenden Erfindung hat sich gezeigt, dass die im erfindungsgemäßen Verfahren einsetzbaren Flüssigkunststoffe eine hervorragende direkte Haftung zu den genannten Polymeren, teilweise mit Ausnahme des FPO's, aufweisen. Folien auf FPO-Basis können in einer besonders bevorzugten Ausführungsform des erfindungsgemäßen Verfahrens nach Vorbehandlung mit einem Haftprimer mit dem erfindungsgemäß einsetzbaren Flüssigkunststoff abgedichtet werden.

Die erfindungsgemäße Abdichtung eines Bereiches wie eines Übergangsbereiches, von Stößen, Nähten, Durchbrechungen oder anderen Stellen des Baubereichs erfolgt im Rahmen der Erfindung im Allgemeinen durch Aufbringung der Flüssigabdichtung in flüssigem Zustand auf den jeweiligen Bereich und anschließender Aushärtung der Flüssigabdichtung. Der Begriff "flüssig" in diesem Zusammenhang umfasst den fließfähigen und auch noch pastösen Zustand der Flüssigabdichtung. Die Aushärtung ist dann abgeschlossen, wenn die Flüssigabdichtung die erforderliche Druckwasserbeständigkeit aufweist.

Die im erfindungsgemäßen Verfahren einzusetzenden Flüssigkunststoffe bzw. Flüssigabdichtmassen werden bei der Abdichtung von Bauwerken besonders bevorzugt in Kombination mit einem verstärkenden Flächengebilde appliziert. Mit diesem Begriff sind alle gewirkten, gestrickten, gewebten, geflochtenen, gehäkelten oder auf sonstige Art aus Garnen oder Fasern hergestellten textilen Flächengebilde mit umfasst. Geeignete verstärkende Flächengebilde basieren auf organischen oder anorganischen Fasern wie beispielsweise Glasfasern, Kohlefasern oder Kunststofffasern wie beispielsweise Polyester-, Polyamid-, Aramid- oder Polyacrylatfasern. Vorzugsweise werden Vliesmaterialien eingesetzt wie beispielsweise Glasfaservliese oder Polyestervliese. Besonders bevorzugt werden Flächengebilde wie insbesondere auch Polyestervliese mit einem Raumgewicht von 80 bis 190 g/m², vorzugsweise 110 bis 165 g/m², im erfindungsgemäßen Verfahren eingesetzt.

Eine erfindungsgemäße Frischbetonverbundfolie ist insbesondere eine druckwasserresistente Folie, welche einem Wasserdruck von ≥ 1 bar, vorzugsweise ≥ 1,5 bar oder ≥ 2 bar, besonders bevorzugt ≥ 3 bar oder ≥ 4 bar, beispielsweise ≥ 5 bar, wasserdicht standhält (beispielsweise bei 20°C Wassertemperatur und über einen Zeitraum von größer 1 Monat, sofern sich aus den einschlägigen Normen oder Richtlinien nichts anderes ergibt) und somit druckwasserresistent ist.

Die Frischbetonverbundfolie soll allgemein im Rahmen der Erfindung die Erfordernisse der DIN EN 13967 (in der am Prioritätstag gültigen Fassung) erfüllen. Allgemein ist die Frischbetonverbundfolie vorzugsweise zumindest einseitig - nämlich in Einbaulage auf der dem Beton zugewandten Seite - so ausgerüstet, dass diese einen Verbund, insbesondere physikalischen Verbund, mit dem durch Hydratation erhärtenden Beton bzw. Zementleim (Mischung aus Zement und Wasser als Grundlage des Betons) eingeht, wobei der Verbund insbesondere eine Haftzugfestigkeit von ≥ 0,3 N/mm2 oder ≥ 0,4 N/mm2 aufweisen kann, beispielsweise auch bis 0,7 N/mm2 oder höher. Die Haftzugfestigkeit kann insbesondere nach DIN EN 13596 - *"Abdichtungsbahnen - Abdichtungssysteme auf Beton für Brücken und andere Verkehrsflächen - Bestimmung der Abreißfestigkeit"* bestimmt sein. Die genannte zumindest einseitige Ausrüstung kann insbesondere durch eine entsprechende Klebeschicht oder durch eine Vlieskaschierung mit einem eingearbeiteten, ggf. auch quellfähigem Dichtstoff realisiert sein. Die den Verbund mit dem Beton bzw. Zementleim erzeugende Ausrüstung kann insbesondere durch eine Beschichtung oder ggf. eine Folie erzeugt sein oder eine solche umfassen.

Als "physikalischer Verbund" im Sinne der Erfindung sei verstanden, dass die verbundenen Schichten eine innige mikroskopische Verzahnung ausbilden, welche beispielsweise im mikroskopischen (insbesondere lichtmikroskopischen) Querschnittsbild als verzahnte Phasengrenze zwischen den Schichten erkennbar ist, beispielsweise entsprechend ineinandergreifenden Zahnrädern. Der physikalische Verbund ist somit von einer rein adhäsiven Verbindung der aneinander angrenzenden Schichten zu unterscheiden. Gegebenenfalls können bei einem physikalischen Verbund auch zusätzlich Adhäsivkräfte zwischen den Schichten wirken, gegebenenfalls aber auch nicht.

Die druckwasserdichte Lage der Frischbetonfolie kann auf Basis von HDPE (high density polyethylen), flexiblen Polyolefinen (FPO), PVC (insbesondere PVC-P) oder anderen geeigneten Polymeren bestehen.

Die Frischbetonverbundfolie kann allgemein einen Lagenaufbau aufweisen oder umfassen mit (i) einer druckwasserdichten Folie, insbesondere Polymerfolie, bspw. einer HDPE-Folie, (ii) einer vorzugsweise auf dieser angeordneten Lage einer Klebemittelschicht, insbesondere einer druckempfindlichen Klebemittelschicht, und (iii) mit einer außenseitigen, vorzugsweise auf der Klebemittelschicht angeordneten, Lage einer Polymerschichtbeschichtung eines Polymers mit funktionellen Gruppen (ungleich reine Kohlenwasserstoffgruppen), beispielsweise Ester- und/oder Amid- und/oder Urethangruppen, im speziellen Estergruppen, insbesondere Acrylatgruppen unter Ausbildung einer Acrylatbeschichtung, oder mit einer Vlieskaschierung, wobei ergänzend (iv) vorzugsweise eine auf der Polymer- bzw. Acrylatbeschichtung angeordneten, vor der Anwendung abziehbaren Schutzfolie vorgesehen sein kann. Die Polymerbeschichtung dient der Herstellung des genannten Verbundes mit dem Beton bzw. Zementleim.

Zur Definition einer Frischbetonverbundfolie im Rahmen der Erfindung sei die Veröffentlichung "Frischbetonverbundsysteme mit abP in WU-Betonkonstruktionen - Besonderheiten bei der Verwendung ungeregelter Abdichtungen, Dr.-Ing. Knut Herrmann, MPA Braunschweig, in Leipziger Abdichtungsseminar 21. Januar 2014, vollinhaltlich mit herangezogen.

Allgemein im Rahmen der Erfindung entsteht in Verbindung der Frischbetonfolie mit dem Beton im Zuge der Erhärtung des Betons vorzugsweise eine vollflächige adhäsiv ankoppelnde Verbindung, die im Falle einer Schädigung der Frischbetonfolie eine Hinterläufigkeit von Wasser zwischen dem Betonbauteil und der Frischbetonfolie verhindert. Die Frischbetonfolie kann allgemein riss- und fugenüberbrückende Eigenschaften aufweisen, insbesondere unter einem Wasserdruck der genannten Druckwasserbeständigkeit, wobei die Folie vorzugsweise Risse im Beton mit Rissweiten von mindestens 1,0 mm, beispielsweise bis 4 mm oder größer, unter dem anstehende Wasserdruck, beispielsweise bis zu 5 bar, überbrücken kann. Die druckwasserfeste, flächige oder insbesondere vollflächige Verbindung der Frischbetonverbundfolie mit dem Beton ist kann insbesondere eine Beständigkeit gegen Wasserdrucke bis zu 1 bar, oder vorzugsweise bis zu 1,5 bar oder bis zu 1,75 bar, besonders bevorzugt bis zu 2 bar oder bis zu 2,5 bar aufweisen, vorzugsweise bis zu 3 bar oder bis zu 4 bar, gegebenenfalls auch bis zu 5 bar oder höher. Die Wasserdruckbeständigkeit bezieht sich auch hier insbesondere auf eine positive Druckbelastung. Allgemein im Rahmen bezieht sich der Begriff der Druckwasserfestigkeit auf einen Druck von "bis zu" darauf, dass die jeweilige Verbindung oder das jeweilige Material bis zumindest diesem Wasserdruck dicht ist. Dies bezieht sich insbesondere jeweils auf Wasser einer Temperatur von 20°C und einen Zeitraum von größer 1 Monat, sofern sich aus den einschlägigen Normen nichts anderes ergibt.

Die Frischbetonfolie ist insbesondere in Verbindung mit wasserundurchlässigen Betonkonstruktionen (WUB-KO), beispielsweise entsprechend der Richtlinie "Wasserundurchlässige Bauwerke aus Beton": Deutscher Ausschuss für Stahlbeton (DAfStb), Ausgabe November 2003 und/oder Erläuterungen zur DAfStb-Richtlinie "Wasserundurchlässige Bauwerke aus Beton": Deutscher Ausschuss für Stahlbeton, Heft 555, Berlin 2006 einsetztbar, oder aber auch in Verbindung mit Bauwerken, die nur aus wasserundurchläsigem Beton (keine WUB-KO Erfordernisse) aus wasserdurchlässigem Beton (Normalbeton), wobei jeweils der genannte Beton mit der Frischbetonverbundfolie wie beschrieben verbunden ist.

Vorzugsweise erfüllt im Rahmen der Erfindung die Frischbetonverbundfolie die Erfordernisse nach DIN EN 13967.

Die Frischbetonverbundfolie kann allgemein eine Dicke von ≥ 0,8 mm oder ≥ 1,2 mm aufweisen, gegebenenfalls auch bis zu 1,2 mm, ohne hierauf beschränkt zu sein.

Die Verarbeitung von Frischbetonverbundfolien in dem erfindungsgemäßen Verfahren mit der Flüssigabdichtungsmasse wird im folgenden beschrieben, wobei die beschriebenen Verfahrensschritte vorzugsweise in der beschriebenen Reihenfolge durchgeführt werden. Allerdings sind geeignete Abwandlungen des Verfahrens möglich, insbesondere auch in Bezug auf die Reihenfolge der der Durchführung der Schritte oder von Teilschritten derselben.

Die Verarbeitung von Frischbetonverbundfolien erfolgt im Rahmen der Erfindung typischerweise so, dass zunächst auf einem geeigneten Untergrund die Folie in der Art ausgelegt wird, dass die Vlies- bzw. Kleber-kaschierte Seite nach oben zu liegen kommt. Dann werden Stöße und Längsnähte verklebt bzw. abgedichtet. Im erfindungsgemäßen Verfahren kann die Abdichtung dieser Bereiche prinzipiell mit dem erfindungsgemäßen, nachstehend näher charakterisierten Flüssigkunststoff (Flüssigabdichtungsmasse) ausgeführt werden, vielfach bietet aber in diesen Bereichen die Verwendung geeigneter Klebebänder einen hinreichenden Schutz gegen spätere Undichtigkeit.

Im nächsten Arbeitsschritt wird die Dichtungsbahn auf eine Schalung aufgebracht. Auch in diesem Bereich werden anschließend Stöße und Längsnähte verklebt bzw. abgedichtet. Die Abdichtung auch dieser Bereiche kann vorteilhafterweise im erfindungsgemäßen Verfahren ausgeführt werden, in diesen Bereichen bietet aber die Verwendung geeigneter Klebebänder in der Regel einen hinreichenden Schutz gegen spätere Undichtigkeit.

Im dritten Schritt werden die senkrechten und die waagerechten Folienteile durch vorgeformte Folienabschnitte in Form von Randaufkantungen und Ecken miteinander verbunden, wobei diese Verbindung bevorzugt im erfindungsgemäßen Verfahren ausgeführt wird. Insbesondere bei komplizierter Gebäudegeometrie bietet das erfindungsgemäße Verfahren Verarbeitungsvorteile und eine erhöhte Funktionssicherheit gegenüber einer Abdichtung mit Klebebändern.

Im vierten Schritt werden Details wie Rohrdurchdringungen, Pfahlköpfe oder Fundamenterder mit der Frischbetonverbundfolie verbunden. Auch diese Verbindungen werden bevorzugt im erfindungsgemäßen Verfahren mit dem nachstehend näher charakterisierten Flüssigkunststoff ausgeführt.

Im fünften Verarbeitungsschritt wird die Bewehrung auf die abgedichtete Bahn aufgebracht und anschließend wird betoniert. Hierbei sorgt das Gewicht des Frischbetons selber in der Regel dafür, dass die Frischbetonverbundfolie einen vollständigen und festen Verbund mit dem Beton eingeht.

Nach der Entfernung von Schalwänden werden in einem weiteren Arbeitsschritt Stöße und Nähte sowie Spannstellen auf der dem Beton abgewandten Seite der Verbundfolie dauerhaft abgedichtet werden. Diese Abdichtungsarbeiten werden besonders bevorzugt im erfindungsgemäßen Verfahren abgedichtet.

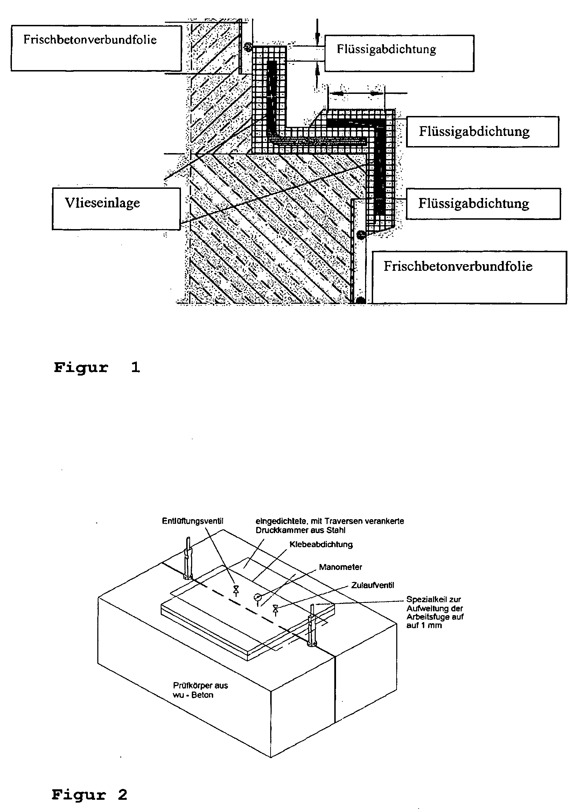

Wird in mehreren Betonierabschnitten gearbeitet, so wie dies beim Übergang vom Streifenfundament zur Wand üblich ist, müssen die Verbundfolien aus den jeweiligen Betonierabschnitten miteinander verbunden werden (siehe Figur 1). Auch dieser Verbund wird bevorzugt im erfindungsgemäßen Verfahren ausgeführt.

Die Verarbeitung im erfindungsgemäßen Verfahren erfolgt dabei typischerweise so, dass der abzudichtende Teil der Frischbetonverbundfolie und/oder der Beton zwischen zwei Teilen der Frischbetonverbundfolie zunächst mit dem Flüssigkunststoff beispielsweise durch Streichen, Rollen oder Rakeln oder dergleichen beschichtet wird. Dann wird vorzugsweise das verstärkende Flächengebilde wie ein Vlies in das Beschichtungssystem (Flüssigabdichtungsmasse) eingelegt bzw. flächig oder vollflächig mit dem Beschichtungssystem in Verbindung gebracht. Anschließend kann das Vlies mit dem Beschichtungssystem beispielsweise durch Streichen, Rollen oder Rakeln so überarbeitet werden, dass das Vlies vollständig mit dem reaktiven Beschichtungssystem bzw. der Flüssigabdichtungsmasse durchtränkt ist und sich darüber hinaus bevorzugt eine homogen Oberflächenstruktur ergibt. Hierbei können auch Vliese oder Vliesabschnitte eingesetzt werden, die anteilig mit einem Klebstoff -insbesondere einem Klebstoff auf Butylkautusck-Basis- versehen sind. Durch diese Maßnahme wird eine Fixierung am frischen Betonteil für die weitere Überarbeitung mit dem Flüssigkunststoff erreicht.

Vorzugsweise wird zur Abdichtung des jeweiligen Bereichs die Flüssigabdichtung in flüssigem Zustand (einschließlich fließfähig oder ggf. auch pastös) mit einer Schichtdicke von ≥ 0,4 mm oder ≥ 0,8 mm auf den abzudichtenden Bereich aufgebracht und dann anschließend zur Aushärtung gebracht, besonders bevorzugt mit einer Schichtdicke von ≥ 1,2 mm oder ≥ 1,5 mm, beispielsweise mit einer Schichtdicke von ≥ 2 mm oder ≥ 2,5 mm. Der Auftrag ist in der Regel ≤ 4 mm oder ≤ 5 mm, meist ≤ 7 mm oder ≤ 10 mm, ohne hierauf beschränkt zu sein. Dies kann jeweils allgemein im Rahmen der Erfindung gelten. Ein Auftrag von 2,3 mm entspricht hierbei bei einer angenommenen Dichte der Masse von 1,3 kg/Liter einem Verbrauch von ca. 3 Kg/m2.

Die Applikation kann insbesondere in der Weise erfolgen, dass eine geeignete Menge der Flüssigabdichtungsmasse, beispielsweise ca. 3 kg pro m² zu beschichtender Fläche appliziert werden, beispielsweise durch Aufbringung auf diese Fläche, insbesondere unter gleichmäßiger Verteilung der Masse über diese Fläche. Dies ermöglicht in Kombination mit dem verstärkenden Vlies bzw. der Verstärkungslage allgemein, eine Beschichtungsdicke von mindestens 2 mm, typischerweise von 2,5 mm bis 3,5 mm (einschließlich der Vlieslage). Die im erfindungsgemäßen Verfahren einzusetzenden Flüssigkunststoffe bzw. Flüssigabdichtungsmassen härten bei den im Baubereich üblichen Umgebungstemperaturen (beispielsweise im Temperaturbereich von -10°C bis +40°C oder +5°C bis +30°C) sehr schnell aus, beispielsweise innerhalb einer Zeit von ca. 30 Minuten bis ca. 4 Stunden, abhängig von Umgebungstemperatur und Luftfeuchtigkeit (ist nicht anderes ausgeführt, so bezieht sich die Luftfeuchtigkeit im Rahmen der Erfindung auf 50% relativer Luftfeuchte bei der jeweiligen Temperatur). Diese Temperaturen sind also übliche Anwendungstemperaturen allgemein im Rahmen der Erfindung.

Im Rahmen der vorliegenden Erfindung hat sich gezeigt, das die im erfindungsgemäßen Verfahren einzusetzenden Flüssigkunststoffe bzw. -abdichtungsmassen auch auf restfeuchten Untergründen, d.h. auf restfeuchten Frischbetonverbundfolien und auf restfeuchtem, insbesondere frischem Beton problemlos applizierbar sind und mit hervorragender Haftung zum Substrat aushärten. Die Härtung erfolgt hierbei auch bei Temperaturen unterhalb von 0°C, beispielsweise im Temperaturbereich zwischen -5°C und -10°C. Dies ist ein wesentlicher Fortschritt im Vergleich zum Stand der Technik, da nicht mehr bis zum vollständigen Abbinden des Betons gewartet werden muss, bis die Abdichtung erfolgt, und weitgehend witterungsunabhängig abgedichtet werden kann.

In einer besonders bevorzugten Ausführungsform des erfindungsgemäßen Verfahrens werden Frischbetonverbundfolien auf Basis flexibilisierter Polyolefine FPO verwendet. Diese Folien basieren typischerweise auf Polyethylen, Polypropylen und Polybutylen. Derartige Folien besitzen einerseits technische Vorteile in Bezug auf ihre dauerhafte Flexibilität, ihre Kälteflexibilität und ihre Langlebigkeit und weisen andererseits eine sehr gute Umweltverträglichkeit auf, da sie halogenfrei sind und keine Schwermetalle oder Weichmacher enthalten. Problematisch ist allerdings die Abdichtung dieser Folien, da diese nicht mit gängigen Klebstoffen verklebt werden können, sondern an den Stoß- und Nahtstellen und im Bereich von Abschlüssen, Anschlüssen und Durchdringungen verschweißt werden müssen. Die Abdichtung mit Klebebändern bietet hier in der Regel keinen ausreichenden Schutz gegen drückendes Wasser, so dass vielfach mit einer Kombination von Klebebändern und Spachtelmassen auf Epoxidharzbasis abgedichtet werden muss. Dieses Verfahren ist nicht nur sehr aufwändig, sondern erfordert darüber hinaus eine Vorbehandlung des Untergrundes durch Anflämmen. Hierbei kommt es aber unter Baustellenbedingungen oft zur Beschädigung der FPO-Folie. Außerdem härten Epoxidharz-basierte Klebstoffe bekanntlich bei Temperaturen unterhalb von 5°C nicht mehr aus. Im Rahmen der vorliegenden Erfindung konnten Haftvermittler gefunden werden, welche eine Abdichtung der Frischbetonverbundfolien auf FPO-Basis im erfindungsgemäßen Verfahren ermöglichen. In einer besonders bevorzugten Ausführungsform des erfindungsgemäßen Verfahrens werden Frischbetonverbundfolien auf FPO-Basis mit einer Primerlösung vorbehandelt und anschließend wie vorstehend beschrieben mit dem gewebearmierten Flüssigkunststoff abgedichtet.

Als Primer werden in der besonders bevorzugten Ausführungsform der vorliegenden Erfindung Lösungen von chlorierten Polyolefinen und/oder modifizierten chlorierten Polyolefinen in organischen Lösemitteln der bekannten Art wie beispielsweise Toluol, Xylol, Etylacetat, Butylacetat, Methoxypropylacetat verwendet. Unter dem Begriff "modifizierte chlorierte Polyolefine" werden mit Säuregruppen und/oder Acrylatgruppen modifizierte chlorierte Polyolefine verstanden, oder Mischungen von chlorierten Polyolefinen mit Olefinen die mit Säuregruppen und/oder Acrylatgruppen modifiziert sind. Der Begriff "chlorierte Polyolefine" ist im Rahmen der Erfindung jeweils insbesondere Sinne von "nicht-modifizierte chlorierte Polyolefine" zu verstehen. Selbstverständlich können jeweils auch Mischungen der chlorierten Polyolefine bzw. der modifizierten chlorierten Polyolefine verwendet werden, einschließlich Mischungen von (nicht modifizierten) chlorierten Polyolefinen mit modifizierten chlorierten Polyolefinen.

Die chlorierten Polyolefine bzw. modifizierten chloroerten Polyolefine können einen Chlorgehalt von 10 bis 45 Gew.-% aufweisen, bevorzugt von 10 bis 25 Gew.-%, jeweils bezogen auf den Festkörper (Feststoffanteil) der chlorierten Polyolefine.

Bevorzugt weisen die eingesetzten chlorierten Polyolefine bzw. modifizierten chlorierten Polyolefine ein zahlenmittleres Molekulargewicht von 7.000 bis 200.000 bevorzugt von 8.000 bis 50.000, auf.

Die Menge an eingesetzten chlorierten Polyolefinen in der Primerformulierung beträgt typischerweise 0,05 bis 15 Gew.-%, besonders bevorzugt von 0,1 bis 10 Gew.-% und ganz besonders bevorzugt von 0,2 bis 5,0 Gew.-%, jeweils bezogen auf das Gesamtgewicht der Primer und auf den Festkörper der chlorierten Polyolefine. Die erfindungsgemäß eingesetzten chlorierten Polyolefine sind dem Fachmann geläufig und im Handel beispielsweise unter den Handelsnamen Eastman TM chlorierte Polyolefine der Firma Eastman Chemical Products, INC., Trapylen der Firma Tramaco oder Hardlen der Firma Toyo Kasei erhältlich.

In der besonders bevorzugten Ausführungsform des erfindungsgemäßen Verfahrens werden demzufolge die abzudichtenden Teile der Frischbetonverbundfolie mit der Primerformulierung vorbehandelt, wobei die Applikation des Primers typischerweise auf den leicht angerauten Untergrund der Folie mittels Pinseln oder Einreiben mit einem Schwamm oder Tuch erfolgt. Nach einer kurzen Ablüftungszeit von ca. 5 Minuten wird die Abdichtung mit dem Flüssigkunststoff wie oben beschrieben ausgeführt.

Im erfindungsgemäßen Verfahren abgedichtet Bauwerksteile sind beständig gegen drückendes Wasser, gegen nicht drückendes Wasser und gegen Bodenfeuchte und genügen den Ansprüchen der "Prüfgrundsätze zur Erteilung von allgemeinen bauaufsichtlichen Prüfzeugnissen für Übergänge von Bauwerksabdichtungen auf Bauteile aus Beton mit hohem Wassereindringwiderstand" des -PG-ÜBB- des Deutschen Instituts für Bautechnik ("Prüfgrundsätze des PG-ÜBB"), Ausgabe September 2010, gegen drückendes und nicht drückendes Wasser und gegen Bodenfeuchte und sind beständig gegenüber einem Wasserdruck bis 1 bar (=10 Meter Wassersäule) oder bis 1,5 bar Wassersäule, bevorzugt bis 2 bar (=20 Meter Wassersäule) und besonders bevorzugt bis zu einem Wasserdruck von 2,5 bar (=25 Meter Wassersäule).

Ferner betrifft die Erfindung einen Bauwerksabschnitt mit einer erdungsgemäß hergestellten Bauwerksabdichtung. Allgemein kann hierbei bauwerksinnenseitig zu der Frischbetonverbundfolie, mit der Frischbetonverbundfolie flächig und unmittelbar verbunden, eine Betonschicht angeordnet sein oder im Rahmen des erfindungsgemäßen Verfahrens angeordnet werden.

### Patentbeispiele:

### Beispiel 1 (erfindungsgemäß)

Als Abdichtungsmaterialien werden im erfindungsgemäßen Abdichtungsverfahren eingesetzt:
- Sikaproof A: hochflexible Frischbetonverbundfolie auf FPO-Basis (Handelsprodukt der Fa. Sika Deutschland GmbH, Stuttgart)
- Frankosil 1K: Flüssigkunststoff auf Basis Alkoxysilanfunktioneller Polyurethane, Wasserdampfdiffusionswiderstandszahl des ausgehärteten Flüssigkunststoffs=650 (Handelsprodukt der Fa. Franken-Systems GmbH, Kitzingen)
- Frankolan FPO-Primer: lösemittelhaltige Primerformulierung auf Basis eines chlorierten Polyolefins (Handelsprodukt der Fa. Franken-Systems GmbH, Kitzingen)
- Frankolon Polyestervlies 165: gewirktes Vlies auf Basis von Polyesterfasern (Handelsprodukt der Fa. Franken-Systems GmbH, Kitzingen)

Die Flüssigabdichtung zeigt eine hervorragende und dauerhafte Haftung auf der Frischbetonverbundfolie unter Wechsellagerungsbedingungen (nass/trocken, jeweils 7 Tage 20 Zyklen bei 23°C).

Mit den genannten Produkten wird ein Prüfaufbau entsprechend der zitierten "Prüfgrundsätze zur Erteilung von allgemeinen bauaufsichtlichen Prüfzeugnissen für Übergänge von Bauwerksabdichtungen auf Bauteile aus Beton mit hohem Wassereindringwiderstand" (PG-ÜBB)' erstellt (siehe Figur 2). Die Herstellung der Anschlüsse wurde auf einem Beton mit einem Alter von 14 Tagen und einem Beton mit einem Alter von 28 Tagen vorgenommen.

Der Primer wurde mit einem Verbrauch von 100 g/m² auf die Betonkörper aufgebracht. Nach dem Abtrocknen des Primers wurde Frankosil 1K über der noch geschlossenen Fuge im Betonkörper aufgebracht. Das Polyestervlies wurde eingelegt und mit einer Gummirolle angedrückt. Anschließend wurde das Vlies mit einer weiteren Lage Frankosil 1K überarbeitet. Der Materialverbrauch betrug 4,5 kg/m². Die Überlappung des Polyestervlieses über den Fugen betrug 10 mm.

Nach 28 Tagen Lagerung bei Raumtemperatur wurde die Fuge unter den Beschichtungen auf 1 mm geöffnet, durch Messuhren kontrolliert und arretiert. Auf die Beschichtungen wurden Druckglocken aufgebracht und abgedichtet. Die Größe der Druckglocken war so festgelegt, dass sowohl die Beschichtung als auch beidseitig ein ca. 5 cm breiter, nicht beschichteter Streifen mit Wasser beaufschlagt werden konnte. Die Prüfung erfolgte mit einem Wasserdruck von 0,75 bar über einen Zeitraum von 28 Tagen. Während der Prüfung wurde auf dem 14 tage alten Beton und auf dem 28 Tage alten Beton kein Wasseraustritt durch die Fuge oder ein Druckabfall festgestellt.

Nach der Demontage der Druckglocke wurde die Beschichtung auf Beschädigungen oder Randablösungen kontrolliert. Es konnten weder Schäden an der Beschichtung im Fugenbereich, noch Anzeichen von Hinterläufigkeit festgestellt werden.

Der Prüfdruck wurde anschließend auf 1 bar und alle weiteren 7 Tage um 0,5 bar erhöht. Am Ende der Druckstufe 2,5 bar (=25 Meter Wassersäule) war bei dem 14 Tage alten Beton und bei dem 28 Tage alten Beton kein Wasseraustritt erkennbar.

### Beispiel 2 (nicht erfindungsgemäß)

Der Versuchsaufbau aus Beispiel wird analog wiederholt, jedoch wird auf die Applikation des Primers verzichtet. Bei der Öffnung der Fuge kommt es zum Abriss des ausgehärteten Flüssigkunststoffs von der Frischbetonverbundfolie.

### Beispiel 3 (erfindungsgemäß)

Herstellung eines erfindungsgemäßen Flüssigkunststoffs (Angaben in Gewichtsteilen):
In einem handelsüblichen Vakuumdissolver wird ein Flüssigkunststoff auf Basis der folgenden Rohstoffe hergestellt:
   Geniosil WP 1: Alkoxysilanfunktionelles Polyurethan der Fa. Wacker Chemie AG München
   Geniosil XL 10: Vinyltrimethoxysilan, Trocknungsmittel der Fa. Wacker Chemie AG, München
   Wacker HDK H2000: pyrogene Kieselsäure, verstärkender Füllstoff der Fa. Wacker Chemie AG, München
   Martinal ON 320: Aluminiumhydroxid-Flammschutzmittel der Fa. Martinswerk GmbH Bergheim
   Omyacarb 2TAV: obeflächenbehandelte Kreide der Fa. Omya GmbH, Köln
   Geniosil GF 96: Aminopropyltrimethoxysilan, Haftvermittler der Fa. Wacker Chemie AG, München
   Irganox 1076: phenolisches Antioxidationsmittel der Fa. BASF, Ludwigshafen
54 Teile Geniosil WP 1 Polymer und 3 Teile GENIOSIL® XL 10 werden im Vakuumdissolver vorgelegt, anschließend werden 2 Teile Wacker HDK H2000, 20 Teile Omyacarb 2T-AV und 20 Teile MArtinal ON 320 die festen Füllstoffe in beliebiger Reihenfolge zugesetzt und es wird unter Normaldruck intensiv dissolvert, so dass eine Innentemperatur von 50°C erreicht wird. Nach Erreichen der Temperatur von 50°C wird weitere 20 Minuten bei 50°C dissolvert. Anschließend wird die Rührgeschwindigkeit verringert und es werden 0,7 Teile Geniosil GF 96 sowie 0,3 Teile Irganox 1076 eingerührt. Es wird 20 Minuten bei einem verringerten Druck von ca. 200 mbar nachgerührt, dann wird durch Zugabe von trockenem Stickstoff entspannt.

Man erhält so eine Flüssigabdichtung die analog Beispiel 1 appliziert und geprüft wird. Der ausgehärtete Flüssigkunststoff besitzt eine Wasserdampfdiffusionswiderstandszahl von 740.

Die Flüssigabdichtung zeigt eine hervorragende und dauerhafte Haftung auf der Frischbetonverbundfolie unter Wechsellagerungsbedingungen (nass/trocken, jeweils 7 Tage, 20 Zyklen bei 23°C).

Im Prüfaufbau entsprechend der, Prüfgrundsätze zur Erteilung von allgemeinen bauaufsichtlichen Prüfzeugnissen für Übergänge von Bauwerksabdichtungen auf Bauteile aus Beton mit hohem Wassereindringwiderstand (PG-ÜBB)' wie im Beispiel 1 beschrieben ist am Ende der Druckstufe 2,5 bar (=25 Meter Wassersäule) bei dem 14 Tage alten Beton und bei dem 28 Tage alten Beton kein Wasseraustritt erkennbar.

### Beispiel 4 (erfindungsgemäß)

Es wird wie in Beispiel 1 verfahren, jedoch wird als Frischbetonverbundfolie Preprufe® 300R eingesetzt. Hierbei handelt es sich um eine mehrlagige Frischbetonverbundfolie, bestehend aus einer HDPE-Dichtungsbahn, einer druckempfindlichen Klebeschicht, sowie einer begehbaren, witterungsunempfindlichen Acryl-Deckbeschichtung. In diesem Fall kann auf die Anwendung eines Primers verzichtet werden. Nach Entfernen der Schutzfolie wurde die Deckbeschichtung durch Abreiben mit Frankolan SL-Reiniger von Trennmittelresten befreit, anschließend wurde die Flüssigabdichtung wie in Beispiel 1 beschrieben auf die Acryldeckbeschichtung appliziert. Die Flüssigabdichtung zeigt eine hervorragende und dauerhafte Haftung auf der Frischbetonverbundfolie unter Wechsellagerungsbedingungen (nass/trocken, jeweils 7 Tage, 20 Zyklen bei 23°C).

Nach den Beispielen werden also Alkoxysilan-funktionelle Polyether-Polymere nach Typ (ii) des Anspruch 2 eingesetzt, also erhalten durch Umsetzung langkettiger Polyetherpolyole, vorzugsweise Polyetherdiole mit Isocyanatosilanen der angegebenen Strukturformel. Alternativ sind aber entsprechend auch Alkoxysilan-funktionelle Polyether-Polymere nach Typ (i) des Anspruch 2 einsetzbar, also erhalten durch Umsetzung von Isocyanat-Prepolymeren auf Basis langkettiger Polyether mit Aminosilanen der angegebenen allgemeinen chemischen Strukturformel.

## Patentansprüche

1. Verfahren zur druckwasserfesten Abdichtung von polymeren Frischbetonverbundfolien im Bereich von Verbindungen, Durchdringungen und/oder Anschlüssen durch Applikation einer Flüssigabdichtungsmasse auf Basis von Alkoxysilan-funktionellen Polyether-Polymeren, wobei die Flüssigabdichtungsmasse im flüssigen Zustand auf die Verbundfolie aufgebracht und anschließend zur Aushärtung gebracht wird, wobei
eine Flüssigabdichtungsmasse auf Basis silylierter Polyurethane eingesetzt wird, enthaltend
A) silylierte Polyurethane, die entweder hergestellt werden durch
(i) Umsetzung von Isocyanat-Prepolymeren auf Basis langkettiger Polyether mit Aminosilanen der allgemeinen chemischen Strukturformel 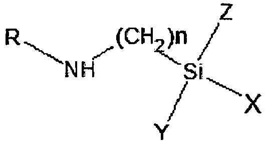 wobei R für einen organischen Rest mit 1 bis 12 Kohlenstoffatomen steht, n für eine ganze Zahl von 1 bis 4 steht und X, Y, Z gleiche oder verschiedene organische Reste darstellen, mit der Maßgabe, daß mindestens einer der Reste eine Alkoxygruppe mit 1 bis 4 Kohlenstoffatomen, vorzugsweise eine Methoxy- oder Ethoxygruppe steht
oder durch
(ii) Umsetzung langkettiger Polyetherpolyole, vorzugsweise Polyetherdiole mit Isocyanatosilanen der allgemeinen Strukturformel 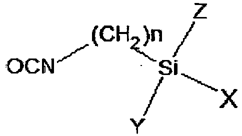 worin n, X,Y, und Z die obengenannte Bedeutung haben;
B) mindestens einen basischen Füllstoff wie beispielsweise gefällte oder gemahlene Kreiden, Metalloxide, - sulfate, -silicate, -hydroxyde, -carbonate und - hydrogencarbonate;
C) mindestens ein Aminosilan der allgemeinen Formel 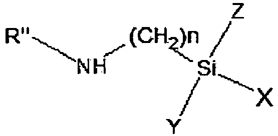 wobei R" für ein Wasserstoffatom, oder einen organischen Rest, bevorzugt einen aliphatischen Kohlenwasserstoffrest mit bis zu 20 Kohlenstoffatomen, Trialkoxysilylpropylgruppe oder eine Aminoethylgruppe steht und n, bzw. X,Y, Z die obengenannte Bedeutung haben, vorzugsweise einschließlich Gemische und/oder Kondensationsprodukte von Aminosilanverbindungen;
D) ggf. weitere Hilfsstoffe.

2. Verfahren gemäß Anspruch 1, **dadurch gekennzeichnet, dass** 2 oder sämtliche der Reste X, Y, Z eine Alkoxygruppe mit 1 bis 4 Kohlenstoffatomen, vorzugsweise eine Methoxy- oder Ethoxygruppe, ist, wobei die Reste X, Y, Z zueinander gleich oder verschieden sein können.

3. Verfahren gemäß einem Ansprüche 1 oder 2, **dadurch gekennzeichnet, dass** die Flüssigabdichtungsmasse 30 bis 80 Gew.-% an Komponente A) enthält.

4. Verfahren gemäß einem der Ansprüche 1 bis 3, **dadurch gekennzeichnet, dass** die Flüssigabdichtungsmasse 10 bis 60 Gew.-% an Komponente B) enthält.

5. Verfahren gemäß einem der Ansprüche 1 bis 4, **dadurch gekennzeichnet, dass** die Flüssigabdichtungsmasse 0,5 bis 5 Gew.-% an Komponente C) enthält.

6. Verfahren gemäß einem der Ansprüche 1 bis 5, **dadurch gekennzeichnet, dass** die Flüssigabdichtungsmasse 2 bis 15 Gew.-% an Komponente D) enthält.

7. Verfahren gemäß einem der vorgehenden Ansprüche, **dadurch gekennzeichnet, dass** die Flüssigabdichtungsmasse mit einer Schichtdicke von ≥ 0,5 mm auf den abzudichtenden Bereich aufgebracht wird und/oder dass bei Anwendung einer Verstärkungslage beispielsweise aus einem textilen Material die Schichtdicke der Abdichtung (einschließlich Verstärkungslage) ≥ 1,8 mm beträgt.

8. Verfahren gemäß einem der vorhergehenden Ansprüche, **dadurch gekennzeichnet, dass** die Flüssigabdichtungsmasse in Kombination mit einem verstärkenden Flächenggebilde wie einem textilen Material appliziert wird, wobei die Flüssigabdichtungsmasse zumindest oberflächlich mit dem Flächengebilde verbunden ist oder das Flächengebilde in der Flüssigabdichtungsmasse eingebettet ist.

9. Verfahren gemäß einem der vorhergehenden Ansprüche, **dadurch gekennzeichnet, dass** die mit der Flüssigabdichtungsmasse hergestellte Abdichtung eine Wasserdampfdiffusionswiderstandszahl von weniger als 1500 gemäß DIN EN 1931:03-2001 aufweist.

10. Verfahren gemäß einem der vorhergehenden Ansprüche, **dadurch gekennzeichnet, dass** die mit der Flüssigabdichtungsmasse hergestellte Abdichtung eine Wasserdampfdiffusionswiderstandszahl von weniger als 1000 gemäß DIN EN 1931:03-2001 aufweist.

11. Verfahren gemäß einem der vorhergehenden Ansprüche, **dadurch gekennzeichnet, dass** Frischbetonverbundfolien auf Basis von Polyisobutylen PIB, Polyvinylchlorid PVC, Ethylen-Vinylacetat-Terpolymer EVA, Ethylen-Propylen-Dien-Terpolymer EPDM oder auf Basis flexibilisierter Polyolefine FPO eingesetzt werden.

12. Verfahren gemäß einem der vorhergehenden Ansprüche, **dadurch gekennzeichnet, dass** Frischbetonverbundfolien auf Basis flexibilisierter Polyolefine in Verbindung mit einem Haftprimer auf Basis chlorierter Polyolefine CPO eingesetzt werden.

13. Verfahren gemäß einem der vorhergehenden Ansprüche, **dadurch gekennzeichnet dass** Stöße und/oder Nähte und/oder Spannstellen auf der dem Beton abgewandten Seite der Verbundfolie mittels der Flüssigabdichtungsmasse abgedichtet werden.

14. Verfahren gemäß einem der vorhergehenden Ansprüche, **dadurch gekennzeichnet dass** Übergänge zwischen verschiedenen Betonierabschnitten im Übergangsbereich zwischen Beton und Verbundfolie mittels der Flüssigabdichtungsmasse verbunden und abgedichtet werden.

15. Verfahren gemäß einem der vorhergehenden Ansprüche, **dadurch gekennzeichnet, dass** die Abdichtung eine Wasserdruckbeständigkeit gegen drückendes Wasser gemäß der DIN 18195 bzw. der Prüfgrundsätze des PG-ÜBB von ≥ 1,25 bar aufweist.

16. Bauwerksabdichtung, hergestellt nach einem Verfahren der Ansprüche 1 bis 15.

17. Bauwerksabschnitt mit einer Bauwerksabdichtung nach Anspruch 16, wobei bauwerksinnenseitig zu der Frischbetonverbundfolie, mit der Frischbetonverbundfolie flächig und unmittelbar verbunden, eine Betonschicht angeordnet ist.

## Claims

1. Method for pressure watertight sealing of polymeric fresh concrete composite films in the field of joints, penetrations and/or connections by application of a liquid sealant based on alkoxysilane-functional polyether polymers, wherein the liquid sealant is applied in liquid state to the composite film, and is then caused to cure, wherein
a liquid sealant based on silylated polyurethanes is used, comprising
A) silylated polyurethanes which are prepared either by
(i) reacting isocyanate prepolymers based on long-chain polyethers with aminosilanes of the general chemical structural formula 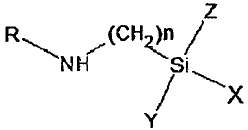 wherein R represents an organic residue having 1 to 12 carbon atoms, n represents an integer of 1 to 4 and X, Y, Z represent identical or different organic residues provided that at least one of the residues has an alkoxy group having 1 to 4 carbon atoms, preferably a methoxy or ethoxy group or by
(ii) reacting long-chain polyether polyols, preferably polyether diols, with isocyanatosilanes of the general structural formula 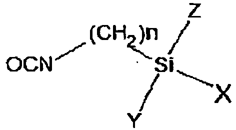 wherein n, X, Y and Z have the above-mentioned meaning;
B) at least one basic filler, such as precipitated or ground chalks, metal oxides, metal sulfates, metal silicates, metal hydroxides, metal carbonates and metal hydrogen carbonates;
C) at least one aminosilane of the general formula 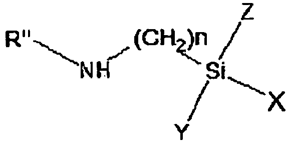 wherein R" represents a hydrogen atom or an organic residue, preferably an aliphatic hydrocarbon residue having up to 20 carbon atoms, a trialkoxysilylpropyl group or an aminoethylene group and n, respectively X, Y, Z have the above-mentioned meaning, preferably including mixtures and/or condensation products of aminosilane compounds;
D) optionally further auxiliaries.

2. Process according to claim 1, **characterized in that** 2 or all of the residues X, Y, Z are an alkoxy group having 1 to 4 carbon atoms, preferably a methoxy or ethoxy group, wherein the residues X, Y, Z can be identical to one another or can be different.

3. Process according to any of claims 1 or 2, **characterized in that** the liquid sealant contains 30 to 80 wt.-% of component A).

4. Process according to any of claims 1 to 3, **characterized in that** the liquid sealant contains 10 to 60 wt.-% of component B).

5. Method according to any of claims 1 to 4, **characterized in that** the liquid sealant contains 0.5 to 5 wt.-% of component C).

6. Process according to any of claims 1 to 5, **characterized in that** the liquid sealant contains 2 to 15 wt.-% of component D).

7. Method according to any of the preceding claims, **characterized in that** the liquid sealant is applied to the area to be sealed with a layer thickness of ≥ 0.5 mm and/or that upon application of a reinforcement layer, for instance of a textile material, the layer thickness of the sealing (including the reinforcement layer) is ≥ 1.8 mm.

8. Method according to any of the preceding claims, **characterized in that** the liquid sealant is applied in combination with a reinforcing fabric, such as a textile material, wherein the liquid sealant is connected to the fabric at least along the surface thereof or else the fabric is embedded in the liquid sealant.

9. Process according to any of the preceding claims, **characterized in that** the sealing produced by the liquid sealant has a water vapour diffusion resistance factor of less than 1500 according to standard DIN EN 1931:03-2001.

10. Process according to any of the preceding claims, **characterized in that** the sealing produced by the liquid sealant has a water vapour diffusion resistance factor of less than 1000 according to standard DIN EN 1931:03-2001.

11. Process according to any of the preceding claims, **characterized in that** fresh concrete composite films based on polyisobutylene PIB, polyvinyl chloride PVC, ethylene vinyl acetate terpolymer EVA, ethylene-propylene-diene terpolymer EPDM, or based on flexibilised polyolefins FPO are used.

12. Process according to any of the preceding claims, **characterized in that** fresh concrete composite films based on flexibilised polyolefins in combination with an adhesive primer based on chlorinated polyolefins CPO are used.

13. Process according to any of the preceding claims, **characterized in that** discontinuities and/or seams and/or strained areas are sealed by means of the liquid sealant on the side of the composite film facing away from the concrete.

14. Process according to any of the preceding claims, **characterized in that** transitions between different concrete sections in the transition zone between concrete and composite film are joined and sealed by the liquid sealant.

15. Process according to any of the preceding claims, **characterized in that** the sealing has a water pressure resistance against pressurized water according to standard DIN 18195 and the testing requirements of PG-ÜBB of ≥ 1.25 bar.

16. Building structure sealing produced by a process according to claims 1 to 15.

17. Building structure section having a building structure sealing according to claim 16, wherein a concrete layer is arranged on the inside of the building structure with respect to the fresh concrete composite film and is joined directly with and over an extensive area of the fresh concrete composite film.

## Revendications

1. Procédé de scellement étanche à l'eau sous pression de feuilles composites à béton frais polymériques dans le domaine de jonctions, de pénétrations et/ou de connexions par l'application d'un scellant liquide à base de polymères de polyéther à fonctionnalité alkoxysilane, dans lequel le scellant liquide est appliqué en état liquide à la feuille composite et est puis fait durcir, dans lequel un scellant liquide à base de polyuréthane silylé est utilisé, comprenant
A) des polyuréthanes silylés étant préparés soit par
(i) la réaction de prepolymères d'isocyanate à base de polyéthers à longue chaine avec d'aminosilanes de formule chimique structurelle générale 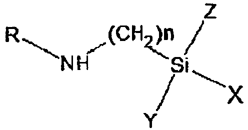 dans lequel R représente un résidu organique ayant 1 à 12 atomes de carbone, n représente un entier de 1 à 4 et X, Y et Z représentent des résidus organiques identiques ou différents à condition qu'au moins un des résidus présente un groupe alkoxy ayant 1 à 4 atomes de carbone, de préférence un groupe méthoxy ou éthoxy ou soit par
(ii) la réaction de polyols de polyéther à chaine longue, de préférence de diols de polyéther avec d'isocyanatosilanes de formule structurelle générale : 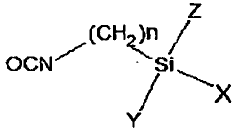 dans lequel n, X, Y et Z ont la signification précitée;
B) au moins une charge basique, telles que des craies précipitées ou broyées, des oxydes métalliques, des sulfates métalliques, des silicates métalliques, des hydroxydes métalliques, des carbonates métalliques, et des hydrogènocarbonates métalliques;
C) au moins un aminosilane de formule générale 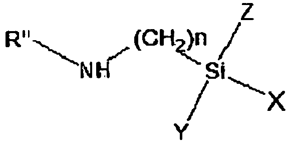 dans lequel R" représente un atome d'hydrogène ou un résidu organique, de préférence un résidu d'hydrocarbure aliphatique ayant jusqu'à 20 atomes de carbone, un groupe trialkoxy-silyle-propyle ou un groupe aminoéthylene et n, respectivement X, Y, Z ont la signification précitée, de préférence contenant des mélanges et/ou des produits de condensation de composés d'aminosilane;
D) facultativement d'autres adjuvants.

2. Procédé selon la revendication 1, **caractérisé en ce que** 2 ou toutes les résidus X, Y, Z sont un groupe alkoxy ayant 1 à 4 atomes de carbone, de préférence un groupe méthoxy ou éthoxy, dans lequel les résidus X, Y, Z peuvent être identiques l'un à l'autre ou peuvent être différents.

3. Procédé selon l'une quelconque des revendications 1 ou 2, **caractérisé en ce que** le scellant liquide contient 30 à 80 pourcent en poids du composant A).

4. Procédé selon l'une quelconque des revendications 1 à 3, **caractérisé en ce que** le scellant liquide contient 10 à 60 pourcent en poids du composant B).

5. Procédé selon l'une quelconque des revendications 1 à 4, **caractérisé en ce que** le composé liquide contient 0.5 à 5 pourcent en poids du composant C).

6. Procédé selon l'une quelconque des revendications 1 à 5, **caractérisé en ce que** le scellant liquide contient 2 à 15 pourcent en poids du composant D).

7. Procédé selon l'une quelconque des revendications précédentes, **caractérisé en ce que** le scellant liquide est appliqué à la région à sceller avec une épaisseur de couche de ≥ 0.5 mm et/ou lors de l'application d'une couche de renfort, par exemple en matériau textile, l'épaisseur de couche du scellement (y compris la couche de renfort) est ≥ 1.8 mm.

8. Procédé selon l'une quelconque des revendications précédentes, **caractérisé en ce que** le scellant liquide est appliqué en combinaison avec un tissu de renfort tel qu'un matériau textile, dans lequel le scellant liquide est relié au tissu au moins le long de la surface de celui-ci ou le tissu est incorporé dans le scellant liquide.

9. Procédé selon l'une quelconque des revendications précédentes, **caractérisé en ce que** le scellement produit par le scellant liquide présente un facteur de résistance à la diffusion de vapeur d'eau inférieur à 1500 conforme à la norme DIN EN 1931:03-2001.

10. Procédé selon l'une quelconque des revendications précédentes, **caractérisé en ce que** le scellement produit par le scellant liquide présente un facteur de résistance à la diffusion de vapeur d'eau inférieur à 1000 conforme à la norme DIN EN 1931:03-2001.

11. Procédé selon l'une quelconque des revendications précédentes, **caractérisé en ce que** des feuilles de composite à béton frais à base de polyisobutylène PIB, de chlorure de polyvinyle PVC, de terpolymère d'éthylène/acétate de vinyle EVA, de terpolymère d'éthylène/propylène/diène EPDM ou à base de polyoléfines flexibilisées FPO sont utilisées.

12. Procédé selon l'une quelconque des revendications précédentes, **caractérisé en ce que** des feuilles composites à béton frais à base de polyoléfines flexibilisées en combinaison avec un apprêt adhésif à base de polyoléfines chlorées CPO sont utilisées.

13. Procédé selon l'une quelconque des revendications précédentes, **caractérisé en ce que** des discontinuités et/ou des joints et/ou des zones tendues sont scellés au moyen du scellant liquide sur le côté de la feuille composite étant détourné du béton.

14. Procédé selon l'une quelconque des revendications précédentes, **caractérisé en ce que** des transitions entre différentes sections de béton dans la zone de transition entre le béton et la feuille composite sont jointes et scellées à l'aide du scellant liquide.

15. Procédé selon l'une quelconque des revendications précédentes, **caractérisé en ce que** le scellement a une résistance de la pression d'eau contre l'eau de pression conforme à la norme DIN 18195 et les exigences d'essai du PG-ÜBB de ≥ 1.25 bar.

16. Scellement pour une structure de construction produite par un procédé selon les revendications 1 à 15.

17. Section d'une structure de construction ayant un scellement pour une structure de construction selon la revendication 16, dans lequel une couche de béton est agencée à l'intérieur de la structure de construction par rapport à la feuille composite à béton frais et est reliée directement à et le long d'une surface extensive de la feuille composite à béton frais.
